# EUROPEAN PATENT SPECIFICATION

(11) **EP 0 756 397 B1**
(45) Date of publication and mention of the grant of the patent: **25.06.2003**
(21) Application number: 96305505.8
(22) Date of filing: 26.07.1996
(51) Int. Cl.: H04L 9/08

(54) **System and method for key distribution and authentication between a host and a portable device**
System und Verfahren zur Schlüsselverteilung und zur Authentifizierung zwischen einem Host-Prozessor und einer tragbaren Vorrichtung
Système et procédé pour la distribution de clé et pour l'authentification entre un ordinateur hôte et un dispositif portable

(30) Priority: 28.07.1995 EP 95305282
(43) Date of publication of application: 29.01.1997
(73) Proprietor: Hewlett-Packard Company, A Delaware Corporation, Palo Alto, CA 94304 (US); Agilent Technologies, Inc. (a Delaware corporation), Palo Alto, CA 94303 (US)
(72) Inventor: Varadharajan, Vijay, Kingswood, New South Wales 2747 (AU); Dack, David George, Melksham, Wiltshire, SN12 8HX (GB)
(74) Representative: Coker, David Graeme

(56) References cited:
- WO-A-87/05175
- US-A- 5 131 038
- MACHINE DESIGN, vol. 61, no. 2, 26 January 1989, CLEVELAND US, page 42 XP000052605 "PROXIMITY TAGS CONVERSE WITH NEARBY COMPUTER"
- IBM TECHNICAL DISCLOSURE BULLETIN, vol. 29, no. 9, February 1987, NEW YORK US, pages 3949-3950, XP000579987 "ACOUSTICALLY COUPLED SMART CARD"

## Description

### FIELD OF THE INVENTION

This invention relates to a communication system for use with a host device and a portable device (such as e.g. a host computer and a portable computer) to allow authentication of the identity of the portable device and/or to protect communications between the host device and the portable device. In particular, but not exclusively, the invention relates to a system which allows authentication of the identity of the portable device, or secure communications, where the intrinsic security of the communications network between the portable device and the host device cannot guarantee secure communications, for example where communications are via the plain old telephone system (POTS), cellular telephone networks, or other radio links.

### BACKGROUND OF THE INVENTION

There are many situations where it is desirable to be able to authenticate the identity of a remote device before allowing communications between the remote device and the host device, so that only authorised users may gain access to or manipulate data stored on the host device or transfer data between the host and portable devices. Often, the authentication of the identity of the user may be of equal or greater importance than protecting communications against electronic eavesdropping.

The increasing use of portable computing appliances means that a user may store and work on data files on a fixed desktop base appliance at his workstation on site, and take a personal computing appliance such as a portable or palm top computer with him for use off-site. Data may be transferred between the desktop appliance and the personal computer appliance either by a close range I.R. link, or a cable when the two are in close proximity, or via a modem link when the user has the personal computing appliance with him off site. Although allowing remote access provides greater flexibility, an unauthorised user may gain access by emulating an authorised user. The use of passwords provides a basic level of security, but this is not adequate for many situations as they may be intercepted or reverse-engineered (especially since they tend to be only a few characters long and changed infrequently).

There are two common forms of encryption methods. In a public key system, a user has a "public" key which he makes available to those who wish to send him encrypted messages, and a unique "private" key which he keeps secret and uses to decrypt messages encrypted using the public key. An important feature of this method is that it can be used where the sender and receiver never meet, but the method does require a trusted third party repository to produce the public/private key pair, securely to transfer the key pair to the user, and to oversee the system. Thus the system would be cumbersome and expensive for widespread general use.

In a secret key system there is just one key involved in encrypting and decrypting a communication, which is held by both the sender and the receiver. This avoids the need for a third party repository, but it still means that elaborate precautions must usually be taken when supplying the secret key to the sender and receiver, for example a trusted intermediary travelling between the two, and again this is cumbersome and impractical for general widespread use.

Accordingly we have identified a need for a security system for a host device and a portable device which provides enhanced security when the two communicate via a non-secure communication network which is suited for widespread use and which does not require elaborate arrangements or trusted intermediaries for distributing or exchanging keys.

U.S. Patent No. 5 202 922 discloses an encryption scheme for cashless transactions between a "smart" card, which is read by a remote point of sale terminal, and the host computer of the financial institution. The scheme is designed for remote communication only and does not envisage periodic direct communication between the smart card and the host computer. At the beginning of each session, both the smart card and the host computer have the same security key which remains the same for several sessions. For every session, two session keys are generated at separate stages by the host computer and used to encrypt communications and update the financial data on the "smart" card and the host computer in accordance with the financial transaction entered at the point of sale terminal.

Published International Patent Application WO 87/05175 discloses an arrangement in which, in a one-off initialisation routine, a pseudo random source number is generated at a master unit and passed over a secure transmission link to a slave unit to generate a master key. Thereafter communication is over an insecure transmission link, and the master key may be used to securely transfer additional keys over the insecure transmission link.

U.S. Patent No. 5 131 038 describes a portable authentication system in which a memory of a portable transceiver device carries encrypted data identifying an authorised possessor of the device. When the identity of the possessor is required to be authenticated, for example in response to operation of an entry control unit or activation of a proximity sensor, encrypted data are transmitted by the device to an identification transceiver where they are decrypted and used to verify the possessor's identity.

We have also identified many other situations where the portable device and the host device are in close proximity from time to time but often communicate remotely *via* a non-secure communication network and where the authentication of the identity of a user and/or the security of communications are important. For example, a business or domestic telephone user may have a fixed normal phone and a cellular phone, and the user may wish to encrypt or scramble communications to prevent electronic eavesdropping.

### SUMMARY OF THE INVENTION

According to one aspect of this invention, there is provided a communication system, including:-
a host device and a portable device capable of communicating remotely, *via* a communication medium, using a previously-established security key or code data,
direct communication means for providing relatively secure and/or direct communications between said host device and said portable device,
characterised by:
key update means for initiating storage of a fresh security key or code data in said host device and said portable device, for use instead of said previously-established security key or code data for control of or encryption for subsequent remote communications between said devices, and
activation means responsive to the presence of said portable device to cause said key update means to initiate transfer of said fresh security key or code data *via* said direct communication means.

The described embodiments of this invention provide a very simple means of obtaining a high degree of security, secrecy and integrity between an authorised portable use and a host device and also against unauthorised access to that host by third party machines.

Unlike password schemes where a short password a few characters long remains the same for long periods, thus leaving the host device open to attack from other machines, the described embodiments incorporate a secret key which is changed very frequently and which can be very long since it does not have to be remembered by the user, thus offering substantial extra protection.

The key update means may be activated manually or in a variety of ways. Thus the activation means may also be responsive to operation of said direct communication means. For example, where said direct communication means comprises an I.R. communication link, said activation means may comprise means for detecting establishment of said I.R. communication link.

Alternatively, where said direct communication means comprises a cable or wire link connectable between said host device and said portable device, said activation means may comprise means for detecting when said cable or wire link is connected between said host device and said portable device.

The physical extent of the vicinity for any system will depend on the perceived threat of interception of the direct communication, and its nature. Thus with an I.R. link the vicinity could be line of sight contact within a specified range, whilst for a cable link the vicinity may be established by the act of physical connection of the cable link between the devices.

Still further, where said portable device is provided with a cradle or other support means adjacent or associated with said host device, said activation means may comprise means for detecting when said portable device is in or on or docked with said cradle or other support means.

In another embodiment, where said portable device includes a rechargeable battery and said system includes adjacent or associated with said host device electrical charging means for charging said battery, said activation means may comprise means for detecting current flow through said charging means.

When the portable device is in the same vicinity as the host device, the key update means may be activated just once, when the portable device first enters the vicinity, or repeatedly at intervals for as long as the portable device remains in the vicinity.

The host device preferably includes means for identifying a request for remote access *via* said communication medium from a portable device and allowing access only on receipt from the portable appliance of data authenticating the identity thereof.

Advantageously, said portable device and said host device include encryption means for encrypting and decrypting data communicated between said devices, and the key for said encryption means may comprise said security key or code data.

In another aspect, this invention provides a method of authenticating a remote device in a communication system comprising first and second devices capable of communicating remotely *via* a communication medium, using a previously-established security key or code data, and capable of communicating locally *via* a local or direct communication link, characterised by determining whether said first and second devices are in the same vicinity, and initiating transfer of a fresh security key or code data between said devices *via* said local communication link when said first and second devices are in the same vicinity, for use instead of said previously-established security key or code data, whereby the identity of at least one of said devices may be authenticated in subsequent remote communications *via* said communication medium.

In a further aspect, this invention provides a method of encrypting data in a communications system comprising first and second devices capable of communicating remotely *via* a communication medium, using a previously-established security key or code data, and capable of communicating locally *via* a local or direct communication link, characterised by determining whether said first and second devices are in the same vicinity, and initiating transfer of a fresh security key or code data between said devices *via* said local communication link when said first and second devices are in the same vicinity, for use instead of said previously-established security key or code data, whereby subsequent remote communications *via* said communication medium may be encrypted using said fresh security key or code data.

Whilst the invention has been defined above, it extends to any inventive combination of features set out in the following description.

### BRIEF DESCRIPTION OF THE DRAWINGS

The invention may be performed in various ways and, by way of example only, two embodiments thereof will now be described in detail, reference being made to the accompanying drawings, in which:-
- Figure 1: is a block diagram illustrating schematically a communication system in accordance with the invention;
- Figure 2: is an schematic view of a first embodiment of this invention applied to a host computer and a portable computer, and
- Figure 3: is a schematic view of a second embodiment of this invention applied to a normal phone and a cellular phone.

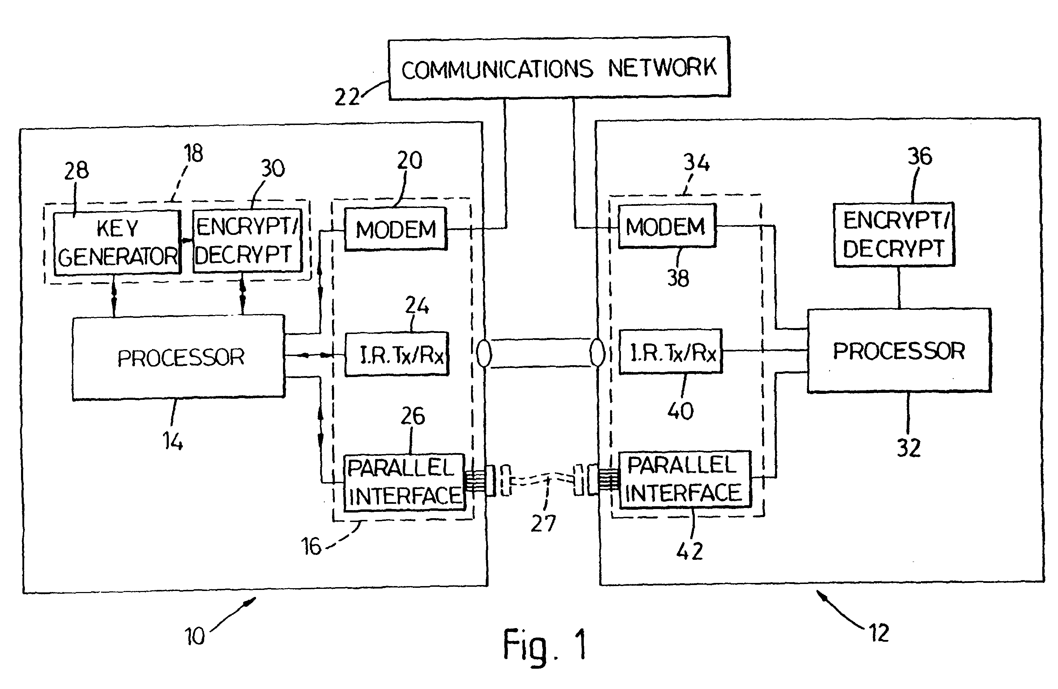

Referring initially to Figure 1, in the described embodiments, a host device 10 and a portable device 12 are capable of communicating both remotely, e.g. *via* a modem link, and directly, when the host and portable device are docked or otherwise locally associated. In practice, whilst communicating remotely is prone to interception and thus is relatively insecure, the risk of security compromise when communicating directly is nil or relatively low. In these embodiments, the portable device and host device periodically exchange a security key via the direct communication link, and the key is then used to control or encrypt subsequent remote communications. The very first key may be input into the host device and the portable device by any of a variety of ways known to those skilled in the art. For example both the host and portable device may have the same standard, relatively insecure code programmed at the outset. The user will be instructed to ensure that a key exchange is carried out as soon as possible, and before connecting the host device to a public communications network. The first key exchange will then provide a secure key.

The host device 10 comprises a processor 14 which here controls operation of the device 10 and also implements the security system. The processor 14 controls a communications module 16, and an encryption/decryption module 18. The communications module 16 comprises a modem 20 for connection to a communications network 22 such as the POTS network or a cellular phone network, to allow remote communication, an I.R. transmitter/receiver unit 24 for direct or local communication with the portable device 12, or a parallel or direct interface 26 for cable or wire connection to the portable device 12 by a cable link 27, shown in dotted lines.

The encryption/decryption module 18 comprises a key generating device 28 for randomly or pseudo-randomly generating a security key or password typically of several thousand characters long, and an encryption/decryption device 30 for encrypting and decrypting communications with the portable device 12, and for implementing a challenge/response routine for authenticating the identity of a portable device 12 attempting to gain access remotely via the communications network 22.

The portable device 12 comprises a processor 32 which controls a communication device 38 and an encryption/decryption module 36 similar to those of the host device. The communication module 34 has a modem 38, an I.R. transmitter receiver unit 40 and a parallel or direct interface 42. The encryption/decryption device 38 is operable to encrypt and decrypt communications with the host device 10 and to take part in a challenge/response routine with the host device, to authenticate the identity of the user.

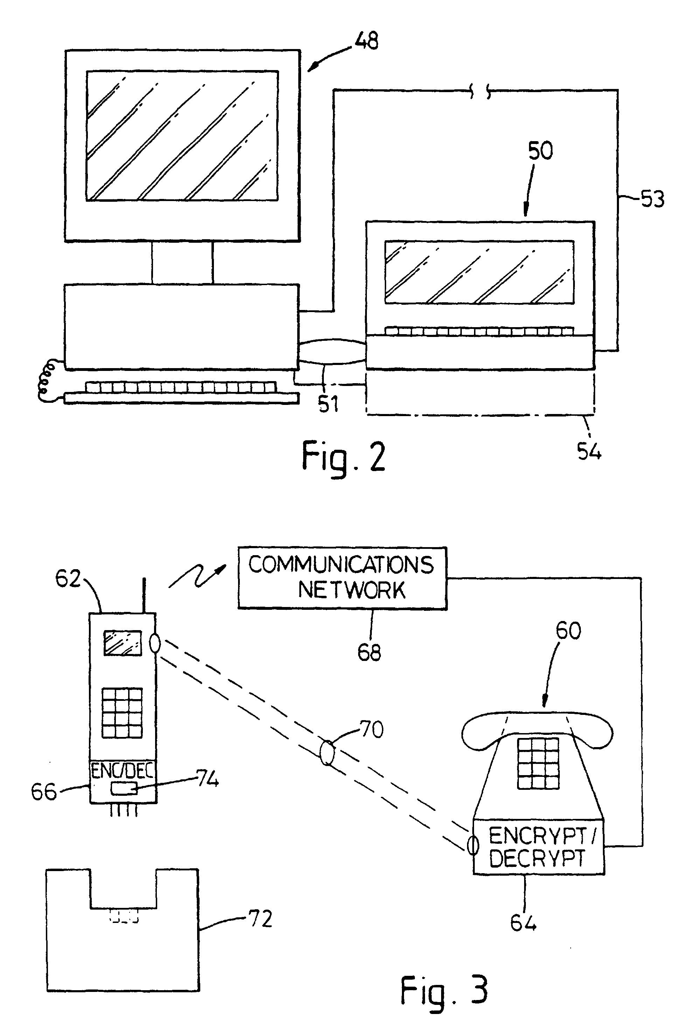

Referring to Figure 2 in conjunction with Figure 1, the first embodiment incorporates the security system to enhance communication security between a host device 10 in the form of a desk top computer 48 and a portable device 12 in the form of a portable computer 50. The portable computer 50 may communicate with the desk top computer locally via an I.R. link 51, or remotely via a modem link indicated generally at 53.

Each time the portable computer 50 is in local or direct communication with the desk top computer 48, this is detected by the processor 14 of the desk top computer 48 and the identity of the portable computer 50 is authenticated by the desk top computer 48 by a suitable test such as a challenge/response routine as outlined below. If the portable computer 50 fails this test, the desk top computer 48 immediately terminates communications. If the portable computer 50 passes the test, the desk top computer initiates a key update routine. The key generating device 28 generates a fresh security key which is stored in the encryption/decryption unit 30 of the host device 10 and transmitted via the local I.R. link to be stored in the encryption/decryption unit 38 of the portable device 12. The security key may be transmitted in clear, or, for greater security, it may be encrypted using the previous security key. The processor of the desk top computer 48 is programmed to allow initiation of the key update routine only when the computers are in direct communication,and when the shared key matches; it does not allow a key update via the modem link. Detection of the proximity of the portable computer 50 may be achieved in various ways. The processor 14 of the desk top computer 48 may monitor the output of the I.R. transmitter/receiver unit 24 and instigate a key update routine once it has identified the portable computer in a hand shake sequence. Instead, the desk top computer 48 may detect when the portable computer is connected to it via a cable 27 and the parallel interface 26. Alternatively, there may be a cradle 54 (shown in dotted lines) into which the portable computer 50 is placed or docked for storage at the workstation, and there may be a switch or other sensor on the cradle 54 which signals the presence of the portable computer 50 to the desk top computer 48. There may be a charger for the portable computer 50 at the workstation, and a detector may determine the presence of the portable computer 50 by monitoring DC flow to the battery of the portable computer. Alternatively, the key update routine may be implemented manually.

During a subsequent remote communication exchange via the modem link 53, the desk top computer 48 issues a random challenge to the portable computer 50. The portable computer 50 calculates a response as a function of the challenge and the current security key and transmits this to the desk top computer 48. The desk top computer checks the response and if it corresponds correctly to the challenge, allows the session to continue.

The above scheme prevents an unauthorised remote user with a machine without the current security key from engaging in a session with the desk top computer. This provides an important level of defence to reduce the risk of unauthorised access. The embodiment also allows remote communications to be encrypted between the portable computer 50 and the desk top computer 48. Here, having authenticated the portable computer 50 by means of the challenge/response routine, the computers encrypt and decrypt the messages exchanged using the current security key. The level of security provided by the encryption depends on the number of characters in the security key. Where the number of characters is greater than the total number of characters to be sent between key exchanges then total security may be achieved.

In addition to providing security for the communications, several other protocol features or checks can be incorporated further to enhance the security of the system, such as non-repudiation, and digital signature.

To achieve a measure of security against the denial that a message was sent, a trusted host could keep an audit file of transactions showing that when a message was received it could only have originated from a portable computer which shared the then current, secret key.

Similarly, the secret key could be used by the portable user to "sign" messages since no other portable would possess that secret key at that time.

Referring to the second embodiment shown in Figure 3, a fixed normal phone 60 and a cellular phone 62 communicate digitally and include encryption and decryption units 64, 66 respectively for encrypting and decrypting the calls. The normal phone and the cellular telephone can communicate either by the cellular/public telephone network or, when the two are in close proximity, by a local I.R. close range narrow beam data link. In this instance proximity is determined using a detector 74 to detect D.C. flow to the battery of the cellular phone 62 when the cellular phone 62 is in a charging cradle 72. Each time the cellular phone 62 is returned to the cradle 72, the cellular phone 62 instructs the encryption/decryption unit 64 of the fixed phone 60 via the I.R. link 70 to initiate a key update routine. As in the previous embodiment the fresh key is generated and stored at the fixed phone unit and transmitted via the local I.R.link 70 to the cellular phone. In normal use, communications between the cellular phone 62 and fixed phone via the cellular/phone network are encrypted/decrypted using the current security key.

## Claims

1. A communication system, including:-
a host device (10; 60) and a portable device (12; 62) capable of communicating remotely, *via* a communication medium (22; 68), using a previously-established security key or code data,
direct communication means (51; 27; 70) for providing relatively secure and/or direct communications between said host device and said portable device,
**characterised by**:
key update means (28) for initiating storage of a fresh security key or code data in said host device and said portable device, for use instead of said previously-established security key or code data for control of or encryption for subsequent remote communications between said devices, and
activation means (24; 54; 74) responsive to the presence of said portable device to cause said key update means to initiate transfer of said fresh security key or code data *via* said direct communication means.

2. A communication system according to claim 1, including means for activating said key update means manually.

3. A communication system according to claim 1, wherein said activation means is also responsive to operation of said direct communication means.

4. A communication system according to any preceding claim, wherein said direct communication means comprises an I.R. communication link (51), and said activation means comprises means for detecting establishment of said I.R. communication link.

5. A communication system according to any of claims 1 to 3, wherein said direct communication means comprises a cable or wire link (27) connectable between said host device and said portable device, and said activation means comprises means for detecting when said cable or wire link is connected between said host device and said portable device.

6. A communication system according to any of claims 1 to 3, wherein said portable device is provided with a cradle or other support means (54) adjacent or associated with said host device, and said activation means comprises means for detecting when said portable device is in or on or docked with said cradle or other support means.

7. A communication system according to any of claims 1 to 3, wherein said portable device (62) includes a rechargeable battery and said system includes adjacent or associated with said host device electrical charging means (72) for charging said battery, wherein said activation means comprises means for detecting current flow (74) through said charging means.

8. A communication system according to any preceding claim, wherein said host device includes means for identifying a request for remote access *via* said communication medium from a portable device and allowing access only on receipt from the portable device of data authenticating the identity thereof.

9. A communication system according to any preceding claim, wherein said portable device and said host device include encryption means (30,36; 64,66) for encrypting and decrypting data communicated between said devices, and wherein the key for said encryption means comprises said security key or code data.

10. A method of authenticating a remote device (12; 62) in a communication system comprising first (10; 60) and second (12; 62) devices capable of communicating remotely *via* a communication medium (22; 68), using a previously-established security key or code data, and capable of communicating locally *via* a local or direct communication link (51; 27; 70), **characterised by** determining whether said first and second devices are in the same vicinity (24; 54; 74), and initiating transfer of a fresh security key or code data (28) between said devices *via* said local communication link when said first and second devices are in the same vicinity, for use instead of said previously-established security key or code data, whereby the identity of at least one of said devices may be authenticated in subsequent remote communications *via* said communication medium.

11. A method of encrypting data in a communications system comprising first (10; 60) and second (12; 62) devices capable of communicating remotely *via* a communication medium (22; 68), using a previously-established security key or code data, and capable of communicating locally *via* a local or direct communication link (51; 27; 70), **characterised by** determining whether said first and second devices are in the same vicinity (24; 54; 74), and initiating transfer of a fresh security key or code data (28) between said devices *via* said local communication link when said first and second devices are in the same vicinity, for use instead of said previously-established security key or code data, whereby subsequent remote communications *via* said communication medium may be encrypted using said fresh security key or code data.

## Patentansprüche

1. Ein Kommunikationssystem, das folgende Merkmale umfaßt:
eine Hostvorrichtung (10; 60) und eine tragbare Vorrichtung (12; 62), die in der Lage sind, entfernt zu kommunizieren, über ein Kommunikationsmedium (22; 68) unter Verwendung eines vorher eingerichteten Sicherheitsschlüssels oder von vorher eingerichteten Codedaten;
eine Direktkommunikationseinrichtung (51; 27; 70) zum Bereitstellen von relativ sicheren und/oder direkten Kommunikationen zwischen der Hostvorrichtung und der tragbaren Vorrichtung;
**gekennzeichnet durch**:
eine Schlüsselaktualisierungseinrichtung (28) zum Initiieren der Speicherung eines frischen Sicherheitsschlüssels oder frischer Codedaten in der Hostvorrichtung und der tragbaren Vorrichtung zur Verwendung anstelle des vorher eingerichteten Sicherheitsschlüssels oder der vorher eingerichteten Codedaten zur Steuerung von oder Verschlüsselung von nachfolgenden entfernten Kommunikationen zwischen den Vorrichtungen, und
eine Aktivierungseinrichtung (24; 54; 74), die auf das Vorhandensein der tragbaren Vorrichtung anspricht, um die Schlüsselaktualisierungseinrichtung zu veranlassen, eine Übertragung des frischen Sicherheitsschlüssels oder der Codedaten über die Direktkommunikationseinrichtung zu initiieren.

2. Ein Kommunikationssystem gemäß Anspruch 1, das eine Einrichtung zum manuellen Aktivieren der Schlüsselaktualisierungseinrichtung umfaßt.

3. Ein Kommunikationssystem gemäß Anspruch 1, bei dem die Aktivierungseinrichtung ferner auf einen Betrieb der Direktkommunikationseinrichtung anspricht.

4. Ein Kommunikationssystem gemäß einem der vorangehenden Ansprüche, bei dem die Direktkommunikationseinrichtung eine IR-Kommunikationsverbindung (51) aufweist und die Aktivierungseinrichtung eine Einrichtung zum Erfassen einer Einrichtung der IR-Kommunikationsverbindung aufweist.

5. Ein Kommunikationssystem gemäß einem der Ansprüche 1 bis 3, bei dem die Direktkommunikationseinrichtung eine Kabel- oder eine Draht-Verbindung (27) aufweist, die zwischen der Hostvorrichtung und der tragbaren Vorrichtung angeschlossen werden kann, und bei der die Aktivierungseinrichtung eine Einrichtung zum Erfassen aufweist, wann die Kabel- oder Draht-Verbindung zwischen der Hostvorrichtung und der tragbaren Vorrichtung angeschlossen ist.

6. Ein Kommunikationssystem gemäß einem der Ansprüche 1 bis 3, bei dem die tragbare Vorrichtung mit einem Halter oder einer anderen Trageeinrichtung (54) benachbart zu oder zugeordnet zu der Hostvorrichtung versehen ist und die Aktivierungseinrichtung eine Einrichtung zum Erfassen aufweist, wann sich die tragbare Vorrichtung in oder auf dem Halter oder der anderen Trageeinrichtung befindet oder an denselben oder dieselbe gedockt ist.

7. Ein Kommunikationssystem gemäß einem der Ansprüche 1 bis 3, bei dem die tragbare Vorrichtung (62) eine wiederaufladbare Batterie umfaßt und das System benachbart zu oder zugeordnet zu der Hostvorrichtung eine elektrische Ladeeinrichtung (72) zum Laden der Batterie umfaßt, wobei die Aktivierungseinrichtung eine Einrichtung zum Erfassen eines Stromflusses (74) durch die Ladeeinrichtung aufweist.

8. Ein Kommunikationssystem gemäß einem der vorangehenden Ansprüche, bei dem die Hostvorrichtung eine Einrichtung zum Identifizieren einer Anforderung nach einem entfernten Zugriff über das Kommunikationsmedium von einer tragbaren Vorrichtung auf das Ermöglichen eines Zugriffs nur auf das Empfangen von Daten von der tragbaren Vorrichtung hin umfaßt, die die Identität derselben authentifizieren.

9. Ein Kommunikationssystem gemäß einem der vorangehenden Ansprüche, bei dem die tragbare Vorrichtung und die Hostvorrichtung eine Verschlüsselungseinrichtung (30, 36; 64, 66) zum Verschlüsseln und Entschlüssen von Daten umfaßt, die zwischen den Vorrichtungen kommuniziert werden, und bei der der Schlüssel für die Verschlüsselungseinrichtung den Sicherheitsschlüssel oder die Codedaten aufweist.

10. Ein Verfahren zum Authentifizieren einer entfernten Vorrichtung (12; 62) in einem Kommunikationssystem, das eine erste (10; 60) und eine zweite (12; 62) Vorrichtung aufweist, die in der Lage sind, entfernt über ein Kommunikationsmedium (22; 68) zu kommunizieren, unter Verwendung eines vorher eingerichteten Sicherheitsschlüssels oder von vorher eingerichteten Codedaten, und die in der Lage sind, lokal über eine lokale oder direkte Kommunikationsverbindung (51; 27; 70) zu kommunizieren, **gekennzeichnet durch** ein Bestimmen, ob die erste und die zweite Vorrichtung in der selben Nachbarschaft (24; 54; 74) sind, und Initiieren der Übertragung eines frischen Sicherheitsschlüssels oder von Codedaten (28) zwischen den Vorrichtungen über die lokale Kommunikationsverbindung, wenn die erste und die zweite Vorrichtung in der selben Nachbarschaft sind, zur Verwendung anstatt des vorher eingerichteten Sicherheitsschlüssels oder der vorher eingerichteten Codedaten, wodurch die Identität von zumindest einer der Vorrichtungen bei nachfolgenden entfernten Kommunikationen über das Kommunikationsmedium authentifiziert werden kann.

11. Ein Verfahren zum Verschlüsseln von Daten in einem Kommunikationssystem, das eine erste (10; 60) und eine zweite (12; 62) Vorrichtung aufweist, die in der Lage sind, entfernt über ein Kommunikationsmedium (22; 68) zu kommunizieren, unter Verwendung eines vorher eingerichteten Sicherheitsschlüssels oder von vorher eingerichteten Codedaten, und die in der Lage sind, lokal über eine lokale oder direkte Kommunikationsverbindung (51; 27; 70) zu kommunizieren, **gekennzeichnet durch** das Bestimmen, ob die erste und die zweite Vorrichtung in der selben Nachbarschaft (24; 54; 74) sind, und **durch** Initiieren einer Übertragung eines frischen Sicherheitsschlüssels oder von Codedaten (28) zwischen den Vorrichtungen über die lokale Kommunikationsverbindung, wenn die erste und die zweite Vorrichtung in der selben Nachbarschaft sind, zur Verwendung anstatt des vorher eingerichteten Sicherheitsschlüssels oder der Codedaten, wodurch nachfolgende entfernte Kommunikationen über das Kommunikationsmedium unter Verwendung des frischen Sicherheitsschlüssels oder der Codedaten verschlüsselt werden können.

## Revendications

1. Un système de communication, comprenant :
un appareil hôte (10; 60) et un appareil portable (12; 62) capables de communiquer à distance via un support de communication (22; 68), utilisant un codage de données ou une clef sécurisé(e) préalablement choisi(e),
un moyen de communication direct (51; 27; 70) assurant des communications sensiblement sécurisées et/ou directes entre ledit appareil hôte et ledit appareil portable,
**caractérisé en ce qu'**il comporte :
un moyen de mise à jour de clef (28) pour activer la mémorisation d'une nouvelle clef ou d'un nouveau codage de données sécurisé(e) dans ledit appareil hôte et ledit appareil portable, pour utilisation en lieu et place dudit codage de données ou de ladite sécurisé(e) préalablement choist(e), et
un moyen d'activation (24 ;54 ;74) sensible à la présence dudit appareil portable pour inciter ledit moyen de mise à jour de clef à activer le transfert de ladite nouvelle clef ou dudit nouveau codage de données via ledit moyen de communication directe.

2. Système de communication selon la revendication 1, comportant un moyen manuel d'activation dudit moyen de mise à jour de clef.

3. Système de communication selon la revendication 1, dans lequel ledit moyen d'activation est aussi sensible à la mise en oeuvre dudit moyen de communication directe.

4. Système de communication selon l'une quelconque des revendications 1 à 3, dans lequel ledit moyen de communication direct comporte une liaison de communication infrarouge (51), et ledit moyen d'activation comporte un moyen de détection de la mise en oeuvre de ladite liaison de communication infrarouge.

5. Système de communication selon l'une quelconque des revendications 1 à 3, dans lequel ledit moyen de communication direct comporte une liaison par fil ou par câble (27) susceptible d'être établie entre ledit appareil hôte et ledit appareil portable et dans lequel le dit moyen d'activation comporte un moyen de détection de l'établissement de ladite liaison par fil ou par câble entre ledit appareil hôte et ledit appareil portable.

6. Système de communication selon l'une quelconque des revendications 1 à 3, dans lequel ledit appareil portable (62) est pourvu d'un berceau ou de tout autre moyen réceptacle (54) à proximité dudit - ou intégré audit - appareil hôte, et dans lequel ledit moyen d'activation comporte un moyen de détection de la présence ou de l'absence dudit appareil mobile dans ou sur ledit berceau ou ledit tout autre moyen réceptacle.

7. Système de communication selon l'une quelconque des revendications 1 à 3, dans lequel ledit appareil portable (62) comporte une batterie rechargeable et dans lequel ledit système de communication est pourvu, sous forme intégrée audit - ou de manière associée avec ledit - système, d'un moyen de recharge (72) pour recharger ladite batterie, dans lequel ledit moyen d'activation comporte un moyen de détection d'un débit de courant électrique (74) dans ledit moyen de recharge (72).

8. Système de communication selon l'une quelconque des revendications 1 à 7, dans lequel ledit appareil hôte comporte un moyen d'identification d'une requête d'accès à distance via ledit support de communication d'un appareil portable et n'autorisant ledit accès qu'après réception de données d'identification transmises par ledit appareil portable.

9. Système de communication selon l'une quelconque des revendications 1 à 8, dans lequel ledit appareil portable et ledit appareil hôte sont munis de moyens de cryptage (30,36; 64,66) destinés à crypter et à décrypter les données échangées entre lesdits appareils, et dans lequel la clef desdits moyens de cryptage inclut lesdites données de sécurisation de ladite clef ou dudit codage de données.

10. Méthode d'authentification d'un appareil distant (12, 62) d'un système de communication comprenant un premier appareil (10; 60) et un second appareil (12; 62) capable de communiquer à distance via un support de communication (22; 68), utilisant une clef de sécurité ou un codage de données prédéterminé(e), et capable de communiquer localement via une liaison locale ou directe (51; 27; 70), **caractérisée en ce qu'**elle détermine si lesdits premier et second appareils sont dans un même voisinage (24; 54; 74), elle provoque le transfert de données relatives à une nouvelle clef de sécurité ou un nouveau codage de données (28) entre lesdits appareils, via ladite liaison de communication locale lorsque lesdits premier et second appareils sont dans le même voisinage, destinée à être utilisée en lieu et place de ladite clef, ou dudit codage, prédéterminé(e), moyennant quoi l'identification d'au moins un des deux appareils peut être authentifiée lors des communications à distance ultérieures via ledit support de communication.

11. Méthode de cryptage de données pour un système de communication comprenant un premier appareil (10; 60) et un second appareil (12; 62) susceptibles de communiquer à distance via un support de communication (22; 68), utilisant une clef ou un codage de sécurité préalablement défini(e), capable de communiquer localement via une liaison locale ou directe (51; 27; 70), **caractérisée en ce qu'**elle détermine si lesdits premier et second appareils sont dans un même voisinage (24 ; 54; 74) et déclenche l'échange d'une nouvelle clef ou d'un nouveau codage sécurisé(e) entre lesdits premier et second appareils via ladite liaison locale ou directe lorsque lesdits premier et second appareils sont dans un même voisinage, pour utilisation en lieu et place de ladite clef ou dudit codage de sécurité préalablement déterminé(e), moyennant quoi les communications à distance ultérieures via ledit support de communication peuvent être cryptées en exploitant ladite nouvelle clef ou ledit nouveau codage sécurisé(e).
